# EUROPEAN PATENT SPECIFICATION

(11) **EP 2 348 829 B1**
(45) Date of publication and mention of the grant of the patent: **13.02.2013**
(21) Application number: 09784960.8
(22) Date of filing: 19.08.2009
(51) Int. Cl.: A01K 80/00

(54) **IMPROVEMENTS IN AND RELATING TO A DREDGE FRAME**
VERBESSERUNGEN EINES BAGGERRAHMENS UND DIESEN BETREFFEND
AMÉLIORATIONS APPORTÉES À UNE ARMATURE DE DRAGUE

(30) Priority: 19.08.2008 GB 0815114
(43) Date of publication of application: 03.08.2011
(73) Proprietor: Deeside Marine Limited, Kirkcudbright, Dumfries and Galloway DG6 4DR (GB)
(72) Inventor: GIDNEY, Richard, Kirkcudbright Dumfries and Galloway DG6 4DR (GB)
(74) Representative: Gordon, Naoise Padhraic Edward
(86) International application number: PCT/GB2009/002022
(87) International publication number: WO 2010/020775

(56) References cited:
- NL-A- 8 403 029
- US-A- 2 414 055
- US-A- 3 113 389
- US-A- 4 399 629
- US-A- 4 464 851
- US-A- 4 646 448
- US-A- 4 839 062
- US-A- 5 027 533
- US-A- 5 048 222

## Description

### Introduction

The present invention relates to a fishing dredge and in particular to a frame for a fishing dredge. Such a device is known from US 3113 389 A.

### Background to the Invention

Dredging is used for harvesting bivalve molluscs such as oysters, clams and scallops. A dredge is a metal framed basket attached to a set of connected iron rings or wire netting called a belly or chain belly. The lower edge of the frame has a raking bar, with or without teeth or swords depending upon the species of mollusc that is being caught. In use, the catch is lifted off the seabed or out of the sea by the raking (or teeth) bar and passes back into a basket or bag known as a belly. Depending on the size of the boat and the depth of water fished the number of dredges or 'bags' may vary from a single dredge towed behind the vessel to from 5 to 20 or more dredges per side. Dredges are generally attached to a towing bar and one is operated from each side of the vessel simultaneously.

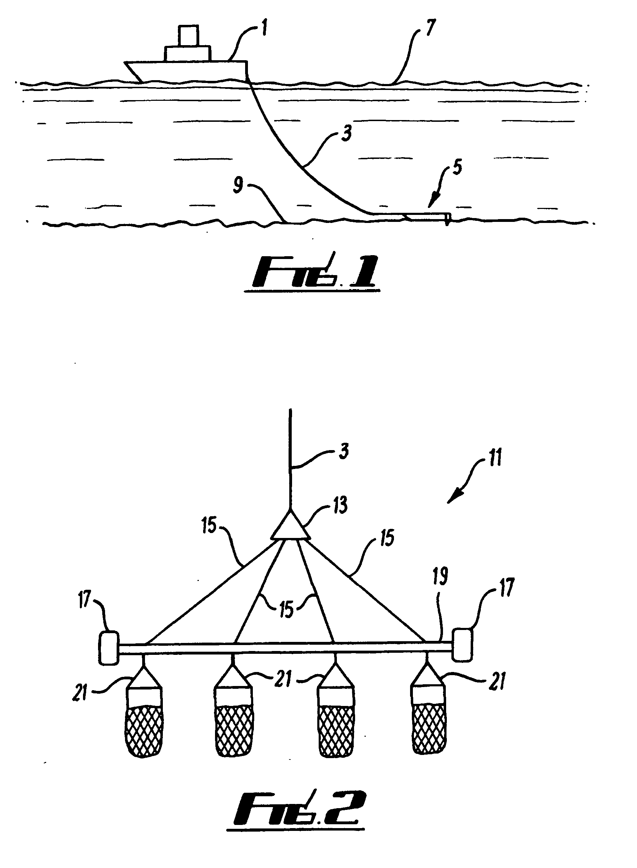

Dredging for molluscs will now be described in more detail with reference to figures 1 to 3. Figure 1 shows a trawler 1 which has a tether or trawl warp 3 connected between the winch of the boat and a dredge 5 which is pulled along the sea bed 9. Figure 2 shows the features of a typical dredge set up. The dredges 11 are connected to the trawler via the trawl warp 3 which connects to a towing triangle 13. Four chain bridles 15 extend from the towing triangle 13 and are connected to a tow bar which has a pair of bobbin wheels 17. The tow bar couples the chain bridles 15 to dredges 21.

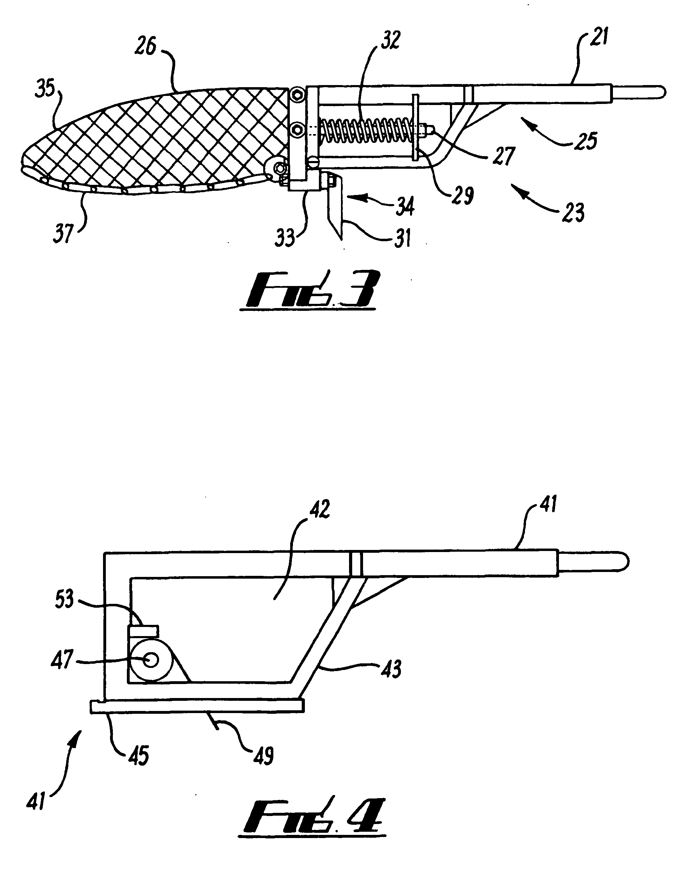

The dredges 21 are shown in more detail in figure 3 .In this figure dredge 23 comprises a frame 25 and a net bag 26. The frame is typically made from steel and has a plurality of teeth or swords 31 which extend downwards from the frame. Eyebolt 27, H-plate 29, spring 32 and paw 33 provide the mechanism by which the sword 31 engages with the sea bed in order to disturb the molluscs. In use, the molluscs are dug out from the sea bed by the sword 31, they gather along the front surface of the frame 34 and then they pass through the frame into the net 26.

The teeth 31 mounted on the tooth bar are fixed in position and are connected to the frame at a pivot point towards the top of the frame. The tooth bar is also attached to a compression spring 32. In normal use the teeth 31 are retained in the downward position in which they dig into the seabed to uncover molluscs. However when a tooth encounters a hard object such as a stone, the tooth bar moves about the pivot point to raise the tooth bar and move over the object. This prevents the tooth bar from getting stuck on the sea bed. However, raising the tooth bar also means that the molluscs that have accumulated on the front of the tooth bar escape under the raised toothbar.

Dredging in general is viewed as having a significant environmental impact because it agitates the sea bed and in the process causes significant damage. In addition, the act of dragging the dredges along the sea bed requires the trawler to use significant amounts of fuel to power its engines.

### Summary of the Invention

In accordance with the invention there is provided a frame for a fishing dredge according to claim 1.

Preferably, the seabed engaging portion of the frame further comprises one or more runner.

Preferably, the seabed engaging portion of the frame further comprises one or more wheel.

Optionally, the seabed engaging portion of the frame further comprises one or more track.

Preferably, the track is moveable.

Optionally the track is flexible.

According to the invention, the teeth are resiliently mounted by means of a spring, whereby the teeth and spring are integrally formed and
the spring is coiled around the mounting means. Optionally, the spring couples the mounting means to the tooth.

Preferably, two teeth are connected to a single spring.

More preferably, the teeth extend from one or mpre springs.

Preferably, the teeth act as cantilever springs fixed to the mounting means.

Optionally, the cantilever springs are provided with additional pivot points to allow the spring tension to be adjusted.

According to the invention, the mounting means is located inside the frame such that the teeth extend outwards from the frame through the seabed engaging portion of the frame.

Preferably, the angle at which the teeth contact the sea bed is adjustable.

Preferably, the frame further comprises funnelling means adapted to direct water into and through the frame.

Preferably the funnelling means comprises one or more extension piece which extends outwards from the frame.

Optionally, one of more of the open sides of the frame are enclosed to form at least part of the funnel.

### Brief Description of the Drawings

The present invention will now be described with reference to the accompanying drawings in which:
Figure 1 is illustrates the process of dredge fishing;
Figure 2 illustrates a known type of fishing dredge;
Figure 3 is a side view of a known type of fishing dredge frame and belly;
Figure 4 is a side view of a first embodiment of a frame in accordance with the present invention;
Figure 5 is a side view of a second embodiment of a frame in accordance with the present invention;
Figure 6 is a rear view of the embodiment of the present invention shown in figure 4;
Figure 7 is a top view of the embodiment of the present invention shown in figure 4;
Figure 8 is a side view of a third embodiment of a frame in accordance with the present invention;
Figure 9 is a rear view of the embodiment of the present invention shown in figure 8;
Figure 10 is a top view of the embodiment of the present invention shown in figure 8;
Figure 11 is a side view of a fourth embodiment of a frame in accordance with the present invention;
Figure 12 is a bottom view of a fifth embodiment of the present invention;
Figure 13 is a bottom view of a sixth embodiment of the present invention;
Figure 14 is a side view the embodiment of the present invention shown in figure 13;
Figure 15 is a side view of a seventh embodiment of the present invention; and
Figure 16 is a bottom view of an eighth embodiment of the present invention.

### Detailed Description of the Drawings

A first embodiment of the present invention is shown in figure 4. Figure 4 is a side view which shows a frame 41 having an open side 42 which is supported by a diagonal frame member. In general the frame of the present invention has longer sides than the prior art frame shown in figure 3. The frame also has a ground engaging rail 45 which is in contact with the seabed and which in this embodiment slides along the seabed in use. Support beam 47 extends across the frame and supports the sword or tooth 49 which is attached to the support beam 47 by means of a helical winding 51 with which it is integrally formed and is an extension of the spring. An abutment 53 is positioned above the helical winding and acts to retain the tooth 49, helical winding 51 and support beam 47 in position. The tooth 49 extends outwards from the frame such that it can scrape the seabed in order to uncover molluscs. The example of figure 4 contains a plurality of teeth (not shown) each of which are separately resiliently mounted.

In this example of the present invention, the frame 41 is dragged along the seabed using rails 45 and the tooth 49 digs into the seabed in order to uncover molluscs. The frame 41 has eight teeth which are independently resiliently mounted on the support beam 47 such that when one of the teeth encounters a hard object such as a stone it will move backwards under tension in order to move over of the stone. As the teeth are all independently resiliently mounted the movement of one tooth over a stone does not affect the ability of the other teeth to continue the operation of digging into the seabed. Therefore even when one tooth encounters an object such as a stone and has to move, the remaining teeth can continue to collect molluscs.

It shall be noted that the same reference numerals have been used to similar or identical features in the following embodiments of the invention.

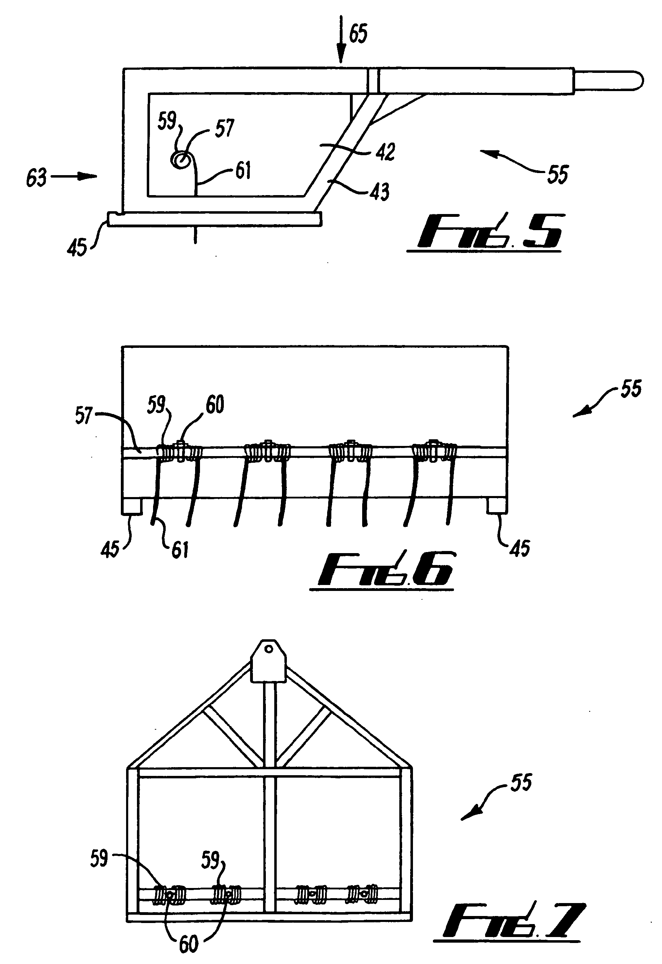

Figures 5, 6 and 7 show a second embodiment of the present invention. Figure 5 is a side view of the frame 55 which has sides 43, an open side 42 and a seabed engaging rail 45. The embodiment further comprises a support beam 57 which contains a helical winding 59 and a tooth 61 extending down from the support beam beyond the rail 45 of the frame 55. The main difference between the second embodiment of the invention and the first embodiment of the invention is that the tooth is perpendicular to the ground engaging rail 45.

Figure 6 is a view of the frame 55 from position 63 shown in figure 5. The shows the support 57 extending across the frame and having eight teeth extending downwards from the support beam 57. It will be noted that in this embodiment of the invention, the teeth are mounted in pairs in the following manner. Both teeth of a pair of teeth are made from a continuous piece of stiff wire which contains two helical sections connected together by a bridge section (not shown). The bridge is attached to the support beam 57 by means of a bolt 60.

Figure 7 is the top view of the frame 55 shown from position 65 in figure 5. This shows the bolt connector 60 in position between the two helical windings. It has been found that hay tines provide a suitable form of tooth for use with this embodiment of the present invention. Hay tines may also be used in the embodiment of figure 4 where the teeth are not connected in pairs.

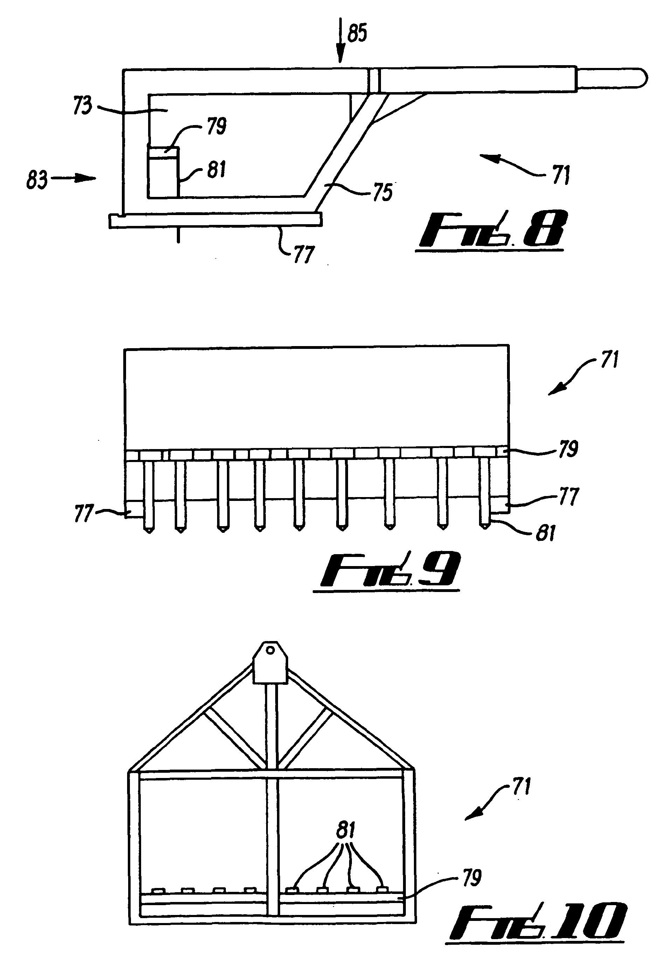

Figures 8, 9 and 10 show a third embodiment of the present invention. In figure 7 the frame 71 comprises an open side 73, frame side 75 and seabed engaging rail 77. Support beam 79 is located inside the frame and tooth 81 extends down from the support beam 79 to a position beyond the seabed engaging rail 77.

Figure 9 shows a view of the embodiment of figure 8 from the position 83. In this figure the support beam 79 is shown along with the teeth 81 which extend down from the support beam 79.

Figure 10 shows a view of the embodiment of figure 8 from position 85. Support beam 79 and the 81 are shown therein.

In this embodiment of the present invention each tooth 81 is attached to the support beam 79 such that it forms a cantilever spring. Therefore when the dredge frame 71 is dragged along the seabed on rails 77 where one of the teeth encounters a hard object such as a rock it is able to move backwards under tension about the pivot point of the cantilever spring in order to move over of the rock.

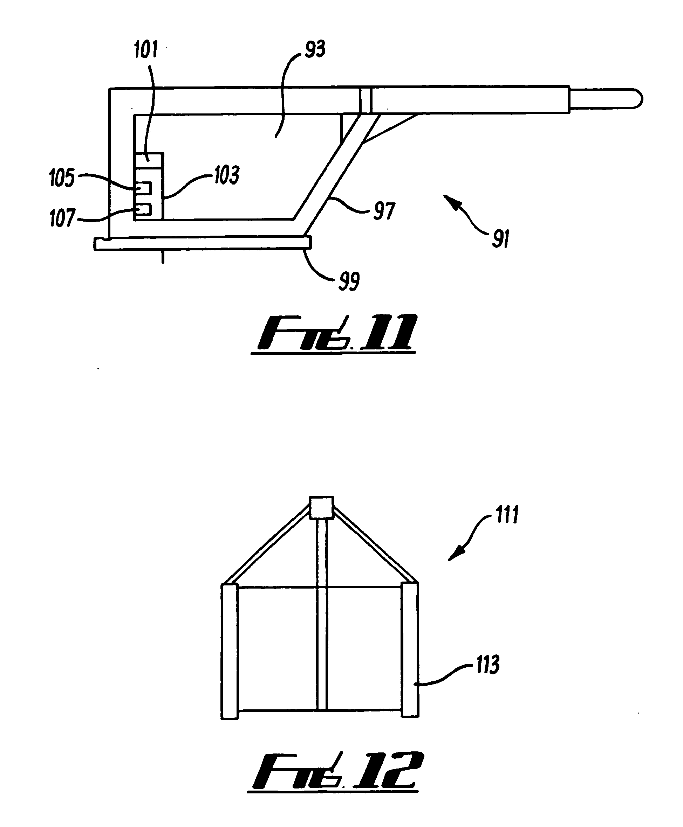

Figures 11 shows another embodiment of the present invention similar to that shown in figures 8 to 10. Figure 11 shows a frame 91 which has open side 93 formed by the frame side 97 and which has a seabed engaging rail 99. As with other embodiments of the present invention, the tooth 103 extends downwards from a support beam 101. However, in this embodiment of the present invention a cantilever spring is modified to include additional pivots 105 and 107. These pivots can be moved into and out of contact with the tooth 103 in order to change the tension of the cantilever spring.

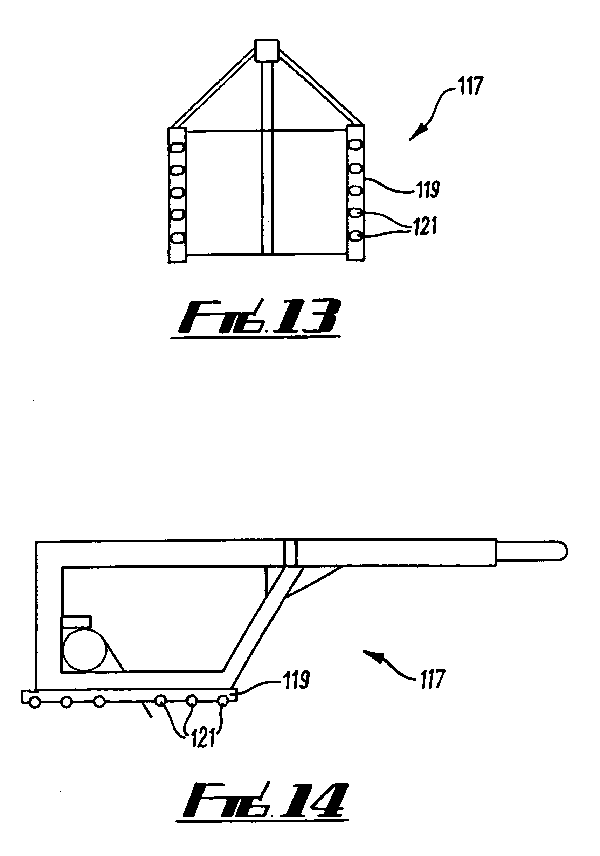

Figures 12, 13 and 14 show additional features of the seabed engaging rails of the present invention. Figure 12 shows a frame 111 with a rail 113 which is a continuous smooth surface in this embodiment of the invention. Figure 13 shows a rail 119 in which a number of rollers 121 are mounted. Figure 14 is the side view of a frame 117 in accordance with the present invention and shows the rail 119 with rollers 121. The purpose of the rail is to assist with the smooth travel of the dredge across the seabed. In addition to the embodiments described above, the rails may be made of the flexible material or contain a movable track which allows the entire rail to rotate whilst the dredge is being dragged across the surface.

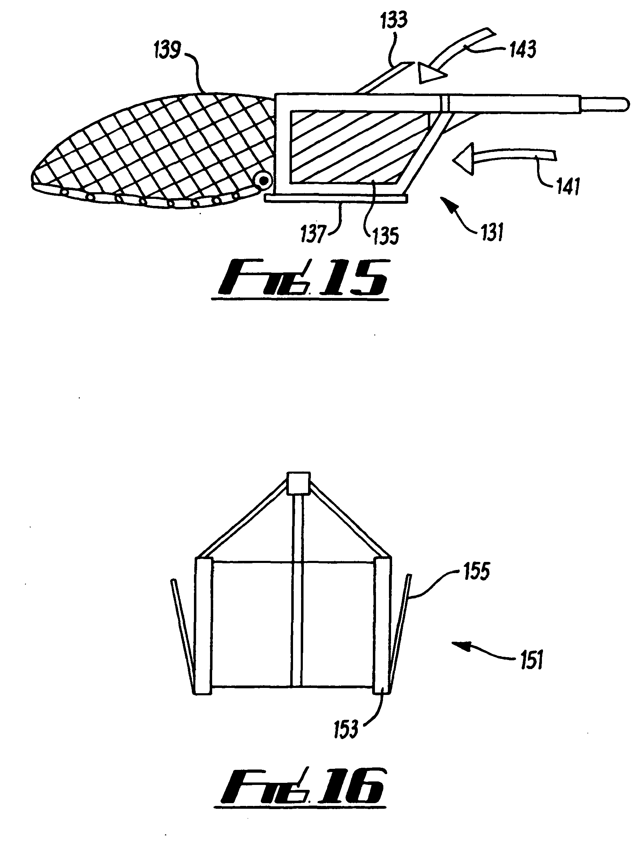

Figures 15 and 16 show the other embodiments of the present invention in which the dredge frame is fitted with funnelling means.

Figure 15 shows a frame 131 having funnelling means 133 and 135 fitted to the frame. As with other embodiments of the present invention the frame has seabed engaging rails 137 and for completeness, a belly 139 is shown in this embodiment. With reference to the funnelling means 133 and 135, these components comprises a fin 133 which is fitted on top of the frame 131 and is designed to collect additional water and force this water through the frame. The direction of water flow is illustrated by reference numerals 143 and 143. Funnelling means 135 comprises a plate fitted to one or both sides of the frame 131 which at least in part encloses the sides of the frame. Funnelling means 135 therefore prevents water from escaping through the side of the frame and direct it through the belly 139.

The embodiment of the invention shown in figure 16 shows a frame 151 with the seabed engaging rail 153 and funnelling means 155. In this embodiment of the invention, the funnelling means 155 is fitted to the side of the frame but is angled outwards to allow for the collection of additional water as the dredge frame is being pulled along the seabed.

In use, the frame is pulled along the seabed and during the operation in which molluscs are dug up from the seabed, water travels through the frame. The embodiments of the invention shown in figures 15 and 16 provide means for increasing the amount of water that passes through the frame and belly.

The advantage of this is that the water enters the frame and belly with greater force and provides a mechanism for removing dirt, small stones, vegetation or anything else that might have become stuck in the frame or belly. It should be noted that the built up of these items within the frame or belly causes a large amount of additional drag thereby making the dredge less efficient and eventually causing the fishermen to lift the dredge from the water to have it cleaned. The removal of dirt, small stones or vegetation or the like allows the dredge to be used for longer periods of time.

Improvements and modifications may be incorporated herein without deviating from the scope of the invention, as defined by the appended claims.

## Claims

1. A fishing dredge frame (41, 55) comprising:
a sea bed engaging portion (45) and an upper portion;
a mounting means (47, 57) located on the frame (41, 55);
a plurality of teeth (49, 61) which are coupled to the mounting means the teeth (49, 61) being resiliently mounted by means of a spring (59) thereon, said teeth (49, 61) extending through and beyond the seabed engaging portion (45) of the frame (41, 55) ;
and wherein at least two of the teeth (49, 61) are resiliently mounted to move independently of one another, **characterised in that**: the teeth (49, 61) and spring (59) are integrally formed and the spring is coiled around the mounling means (47, 57) which is fixed in position in the frame.

2. A frame as claimed in claim 1 wherein, the seabed engaging portion (45) of the frame further comprises one or more runner.

3. A frame as claimed in claim 1 or claim 2 wherein, the seabed engaging portion of the frame (45) further comprises one or more wheel.

4. A frame as claimed in any preceding claim wherein at least two of said teeth (49, 61) are separately resiliently mounted.

5. A frame as claimed in claim 1 wherein, the spring (59) couples the mounling means to the tooth (49, 61).

6. A frame as claimed in claim 1 wherein, two teeth (61) are connected to a single spring.

7. A frame as claimed in any preceding claim wherein, the angle at which the teeth (49, 61) contact the sea bed is adjustable.

8. A frame as claimed in any preceding claim wherein, the frame (131, 151) further comprises funnelling means (135,155) adapted to direct water into and through the frame.

9. A frame as claimed in claim 8 wherein the funnelling means (135, 155) comprises one or more extension piece which extends outwards from the frame.

10. A frame as claimed in claim 8 or claim 9 wherein, one of more of the open sides of the frame are enclosed to form at least part of the funnel.

## Patentansprüche

1. Ein Dredgerahmen (41, 55) zum Fischen, umfassend:
einen in den Meeresboden eingreifenden Abschnitt (45) und einen oberen Abschnitt;
ein Befestigungsmittel (47, 57), das sich an dem Rahmen (41, 55) befindet;
eine Vielzahl von Zähnen (49, 61), die an das Befestigungsmittel gekoppelt sind, wobei die Zähne (49, 61) mittels einer Feder (59) daran elastisch befestigt sind, wobei sich die Zähne (49, 61) durch den in den Meeresboden eingreifenden Abschnitt (45) des Rahmens (41, 55) und darüber hinaus erstrecken;
und wobei mindestens zwei der Zähne (49, 61) elastisch befestigt sind, um sich unabhängig voneinander zu bewegen, **dadurch gekennzeichnet, dass**: die Zähne (49, 61) und die Feder (59) einstückig ausgebildet sind und die Feder um das Befestigungsmittel (47, 57), das in dem Rahmen ortsfest angebracht ist, gewickelt ist.

2. Rahmen nach Anspruch 1, wobei der in den Meeresboden eingreifende Abschnitt (45) des Rahmens ferner eine oder mehrere Kufen umfasst.

3. Rahmen nach Anspruch 1 oder Anspruch 2, wobei der in den Meeresboden eingreifende Abschnitt des Rahmens (45) ferner ein oder mehrere Räder umfasst.

4. Rahmen nach einem der vorhergehenden Ansprüche, wobei mindestens zwei der Zähne (49, 61) separat elastisch befestigt sind.

5. Rahmen nach Anspruch 1, wobei die Feder (59) das Befestigungsmittel an den Zahn (49, 61) koppelt.

6. Rahmen nach Anspruch 1, wobei zwei Zähne (61) mit einer einzelnen Feder verbunden sind.

7. Rahmen nach einem der vorhergehenden Ansprüche, wobei der Winkel, unter dem die Zähne (49, 61) den Meeresboden kontaktieren, einstellbar ist.

8. Rahmen nach einem der vorhergehenden Ansprüche, wobei der Rahmen (131, 151) ferner ein Trichtermittel (135, 155) umfasst, das angepasst ist, um Wasser in den Rahmen und durch diesen hindurch zu leiten.

9. Rahmen nach Anspruch 8, wobei das Trichtermittel (135, 155) ein oder mehrere Ansatzstücke umfasst, das/die sich von dem Rahmen nach außen erstreckt/erstrecken.

10. Rahmen nach Anspruch 8 oder Anspruch 9, wobei eine oder mehrere der offenen Seiten des Rahmens eingeschlossen sind, um mindestenens einen Teil des Trichters zu bilden.

## Revendications

1. Une armature de drague de pêche (41, 55) comportant :
une portion (45) en contact avec le fond marin et une portion supérieure;
un moyen de montage (47, 57) situé sur l'armature (41, 55) ;
une pluralité de dents (49, 61) qui sont couplées au moyen de montage, les dents (49, 61) étant montées de façon élastique au moyen d'un ressort (59) sur celui-ci, lesdites dents (49, 61) s'étendant à travers et au-delà de la portion (45) en contact avec le fond marin de l'armature (41, 55) ;
et dans laquelle au moins deux des dents (49, 61) sont montées de façon élastique pour se déplacer indépendamment l'une de l'autre, **caractérisée en ce que** : les dents (49, 61) et le ressort (59) sont formés d'un seul tenant et le ressort est enroulé autour du moyen de montage (47, 57) qui est fixé en position dans l'armature.

2. Une armature telle que revendiquée dans la revendication 1, la portion (45) en contact avec le fond marin comportant de plus un ou plusieurs patins.

3. Une armature telle que revendiquée dans la revendication 1 ou la revendication 2 dans laquelle la portion (45) en contact avec le fond marin comporte de plus une ou plusieurs roues.

4. Une armature telle que revendiquée dans n'importe quelle revendication précédente dans laquelle au moins deux desdites dents (49, 61) sont montées séparément de façon élastique.

5. Une armature telle que revendiquée dans la revendication 1 dans laquelle le ressort (59) couple le moyen de montage à la dent (49, 61).

6. Une armature telle que revendiquée dans la revendication 1 dans laquelle deux dents (61) sont raccordées à un seul ressort.

7. Une armature telle que revendiquée dans n'importe quelle revendication précédente dans laquelle l'angle auquel les dents (49, 61) entrent en contact avec le fond marin est réglable.

8. Une armature telle que revendiquée dans n'importe quelle revendication précédente dans laquelle l'armature (131, 151) comporte de plus un moyen formant entonnoir (135, 155) adapté pour diriger l'eau dans et à travers l'armature.

9. Une armature telle que revendiquée dans la revendication 8 dans laquelle le moyen de canalisation (135, 155) comporte une ou plusieurs pièces d'extension qui s'étendent vers l'extérieur à partir de l'armature.

10. Une armature telle que revendiquée dans la revendication 8 ou la revendication 9 dans laquelle un ou plusieurs des côtés ouverts de l'armature sont enfermés pour former au moins une partie de l'entonnoir.
